# EUROPEAN PATENT SPECIFICATION

(11) **EP 3 968 013 B1**
(45) Date of publication and mention of the grant of the patent: **24.07.2024**
(21) Application number: 20196238.8
(22) Date of filing: 15.09.2020
(51) Int. Cl.: G01N 23/046, G01S 13/89

(54) **AN APPARATUS AND A METHOD FOR GENERATING AN IMAGE OF AN OBSERVED OBJECT AND A SYSTEM FOR IMAGING AN OBJECT**
VORRICHTUNG UND VERFAHREN ZUR ERZEUGUNG EINES BILDES EINES BEOBACHTETEN OBJEKTS UND SYSTEM ZUR BILDGEBUNG EINES OBJEKTS
APPAREIL ET PROCÉDÉ POUR GÉNÉRER UNE IMAGE D'UN OBJET OBSERVÉ ET SYSTÈME D'IMAGERIE D'UN OBJET

(43) Date of publication of application: 16.03.2022
(73) Proprietor: Fraunhofer-Gesellschaft zur Förderung der angewandten Forschung e.V., 80686 München (DE)
(72) Inventor: HERSCHEL, Reinhold, 53343 Wachtberg (DE); MOSER, Stefan, 79104 Freiburg (DE); HEUSINGER, Victoria, 79104 Freiburg (DE)
(74) Representative: 2SPL Patentanwälte PartG mbB

(56) References cited:
- US-A1- 2008 169 961
- US-A1- 2016 180 553
- US-A1- 2017 103 523
- US-A1- 2018 242 939
- WANG Y ET AL: "MULTISENSOR IMAGE FUSION: CONCEPT, METHOD AND APPLICATION", TECHNICAL REPORT UNIVERSITY OF BREMEN, XX, XX, 1 December 2000 (2000-12-01), pages 1 - 11, XP001187006

## Description

### Field

Examples relate to an apparatus and a method for generating an image of an observed object and a system for imaging an object.

### Background

In non-destructive testing (NDT) objects are analyzed e.g. to determine defects such as cavities or foreign materials without damaging the material during testing. For quality reasons it is often desired to specify internal structures or material composition within the object.

A common approach to analyze objects is computed tomography (CT) scan using penetrating X-rays to generate several projections of the object. By this means, determination of material composition is based on different absorption capacities of different materials. However, the absorption capacity is not only depending on the material but also on the X-ray spectrum of the beam. Further, the absorption capacity correlates with a density of the material which is often not sufficient to specify the material precisely.

Other approaches use radar tomography to generate images comprising a permittivity distribution according to different materials being observed. However, radar based images often comprise artefacts or distortions e.g. due to inevitable diffraction or refraction of microwaves.

Document Wang et al (2000), "Multisensor Image Fusion: Concept, Method and Applications", discloses the fusion of images each generated by using different imaging methods. For medical diagnostics it is proposed to combine CT and MRI images to enable simultaneous observation of soft and dense tissue.

Patent US 2008/169961 A1 describes methods for detecting contraband by using X-rays and radar signals. Based on detected X-rays a location of interest, e.g. indicating a specific atomic density or weight, is determined and used for a radar tomography process to further identify specific dielectric properties at the location of interest.

Patent US 2016/180553 A1 describes a method for generating an image by acquiring CT projection data by means of a computer tomography acquisition unit and concurrently acquiring MR imaging information by means of a MR acquisition unit. The image is reconstructed using the CT projection data and using motion correction for the CT projection data based on the motion determined using the MR imaging information.

Patent US 2017/103523 A1 proposes a method for reconstructing an image of an object by using a first image data record generated by a first imaging modality and a further image data record generated by a further imaging modality. The reconstruction of the image is based on the first image data record using the further image data record.

Patent US 2018/242939 A1 relates to a three-dimensional surface image generating method and system using a multi-energy X-ray image and an optical image which reconstruct an X-ray tomographic image with an improved contrast of soft tissue.

### Summary

There appears to be a demand for an improved concept for generating an image.

An embodiment of an apparatus for generating an image of an observed object is configured to receive first raw data generated observing the object using X-ray tomography. The apparatus is further configured to receive second raw data generated observing the object using radar tomography. Further, the apparatus is configured to reconstruct a first image using first raw data and a second information derived from a reconstruction using second raw data. The apparatus is configured to generate the image using first raw data and second raw data if the first image and a second image derived using the second raw data fulfill a predetermined criterion, the predetermined criterion being fulfilled if a predetermined progress of image reconstruction or a minimum conformity of the first image and the second image is achieved. X-ray tomography can be used to generate first raw data comprising a first information. Radar tomography can be used to generate second raw data comprising a second information differing from the first information. Prior or during the process of generating the image the first information of the first raw data and the second information of the second raw data can be used as a-priori information to generate improved tomographic images. Using raw data comprising complementary information can be beneficial to generate images of higher quality e.g with less artefacts. Further, exposure time or dose for observing the object can be reduced as less projections of the object may be needed to generate an image of good quality.

The first image can be generated based on a reconstruction method using first raw data and based on the a-priori information using the second information. By this means, complementary information based on different observation technologies can be used for reconstructing the first image.

Accordingto some embodiments, the apparatus is further configured to reconstruct the second image using the second raw data and a first information derived from reconstruction of the first image. The second image can be generated based on a reconstruction method using second raw data and based on the a-priori information using the first information. By this means, complementary information based on different observation technologies can be used for reconstructing the second image.

According to the invention, the predetermined criterion is fulfilled if a predetermined progress of image reconstruction or a minimum conformity of the first image and the second image is achieved. The predetermined criterion may e.g. correspond to a specification during image reconstruction or a threshold to be achieved to generate the image. The predetermined criterion may determine a period of time for image generation or the quality of the image.

According to some embodiments, the first image and the second image are reconstructed according to an iterative algorithm. By means of an iterative algorithm, integration of a-priori information into the reconstruction algorithm may be less complicated and more efficient.

According to some embodiments, the first information is on a density, interface, absorption capacity or atomic number of the observed object and the second information is on a permittivity, refractive index or material specification of the observed object. The first information can be used to identify a structure of the observed object and the second information can be used to identify a material of the observed object. Using information on a structure for image reconstruction may be beneficial to derive better information on a material. Using information on a material for image reconstruction may be beneficial to derive better information on a structure.

According to some embodiments, the apparatus uses transmissive or reflective radar signals and X-rays. The image can be generated using raw data based on different observation technologies. Each observation technology may reveal differentinformation on the objecte.g due to different characteristics of transmitted waves or signals or different interactions with the object.

An embodiment of a method for generating an image of an observed object comprises receiving first raw data generated observingthe objectusing X-ray tomography. The method further comprises receiving second raw data generated observing the object using radar tomography. Further, the method comprises reconstructing a first image using first raw data and a second information derived from a reconstruction using second raw data. The method comprises generating the image using first raw data and second raw data if the first image and a second image derived using the second raw data fulfill a predetermined criterion, the predetermined criterion being fulfilled if a predetermined progress of image reconstruction or a minimum conformity of the first image and the second image is achieved. Object observation by means of X-ray tomography can be used to generate first raw data comprising a first information. Object observation by means of radar tomography can be used to generate second raw data comprising a second information differing from the first information. Prior or during the process of generating the image the first information of the first raw data and the second information of the second raw data can be used as a-priori information to generate improvedtomo-graphic images. Using raw data comprising complementary information can be beneficial to generate images of higher quality e.g. with less artefacts. Further, exposure time or dose for observingthe object can be reduced as less projections of the objectmay be neededto generate an image of good quality.

The first image can be generated based on a reconstruction method using first raw data and based on the a-priori information using the second information. By this means, complementary information based on different observation technologies can be used for reconstructing the firstimage. The image can be generated based on the reconstructed first and second image if the predetermined criterion is achieved.

According to some embodiments, the method further comprises reconstructing the second image using the second raw data and a first information derived from reconstruction of the first image. The second image can be generated based on a reconstruction method using second raw data and based on the a-priori information using the first information. By this means, complementary information based on different observation technologies can be used for reconstructing the second image.

According to the invention, the predetermined criterion is fulfilled if a predetermined progress of image reconstruction or a minimum conformity of the first image and the second image is achieved. The predetermined criterion may e.g. correspond to a specification during image reconstruction or a threshold to be achieved to generate the image. The predetermined criterion may determine a period of time for image generation or the quality of the image.

According to some embodiments, the first image and the second image are reconstructed according to an iterative algorithm. By means of an iterative algorithm, integration of a-priori information into the reconstruction algorithm may be less complicated and more efficient.

According to some embodiments, the first information is on a density, interface, absorption capacity or atomic number of the observed object and the second information is on a permittivity, refractive index or material specification of the observed object. The first information can be used to identify a structure of the observed object and the second information can be used to identify a material of the observed object. Using information on a structure for image reconstruction may be beneficial to derive better information on a material. Using information on a material for image reconstruction may be beneficial to derive better information on a structure.

The embodiments use transmissive or reflective radar signals and X-rays. The image can be generated using raw data based on different observation technologies. Each observation technology may reveal different information on the object e.g. due to different characteristics of transmitted waves or signals or different interactions with the object.

An embodiment of a system for imaging an object comprises a first system configured to observe the objectusing X-ray tomography. The system further comprises a second system configured to observe the object according to radar tomography. Further, the system is configured to output raw data generated by the first system and raw data generated by the second system, to reconstruct a first image using raw data generated by the first system and a second information derived from a reconstruction using raw data generated by the second system, and to generate an image using raw data generated by the first system and raw data generated 30 by the second system if the first image and a second image derived using the raw data generated by the second system fulfill a predetermined criterion, the predetermined criterion being fulfilled if a predetermined progress of image reconstruction or a minimum conformity of the first image (208) and the second image (211) is achieved

By means of the system comprising the first system and the second system, the object can be observed without interruption and accordingto different observation technologies. The system may enable to observe the object faster as the first system and the second system may operate simultaneously. Further, observation of the object may be less complicated as the object may not need to be repositioned according to the applied observation technology.

According to some embodiments the first system and the second system use a common coordinate system or each system uses a coordinate system calibrated to the common coordinate system. Using a common coordinate system or coordinate systems calibrated to the common coordinate system may be beneficial forgeneratingthe image faster e.g. due to less or simpler calculations.

Accordingto some embodiments, the observation technology comprises tomography using transmissive or reflective radar signals and X-rays. The image can be generated using raw data based on different observation technologies. Each observation technology may reveal different information on the object e.g. due to different characteristics of transmitted waves or signals or different interactions with the object.

Accordingto some embodiments, the system further comprises a moving system configured to rotate the first system and the second system around the object or to rotate or translate the object. The moving system may enable to observe the object from different perspectives by moving the first or second system or by moving the object. By this means, different projections of the object can be generated and used to generate tomographic images.

An embodiment relates to a computer program with a program code for performing the method for generating an image of an observed object when the computer program is executed by a processor. The computer program can be used for an arbitrary apparatus being able to generate the image using first raw data and second raw data.

### Brief description of the Figures

Some examples of apparatuses and/or methods will be described in the following by way of example only, and with reference to the accompanying figures, in which
Fig. 1 illustrates an embodiment of an apparatus for generating an image of an observed object;
Fig. 2 illustrates a flow chart for generating an image of an observed object according to an embodiment;
Fig. 3 illustrates a flow chart of an embodiment of a method for generating an image of an observed object;
Fig. 4a-c illustrates embodiments of systems for imaging objects by means of rotating moving systems;
Fig. 5a-c illustrates embodiments of systems for imaging objects by means of translating moving systems; and
Fig. 6a-b illustrates embodiments of systems for imaging objects by means of several radiating/transmitting sources or detectors.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/orB" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

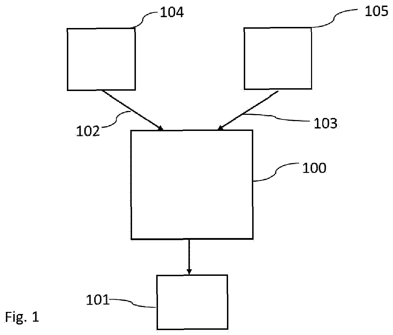

Fig. 1 illustrates an embodiment of an apparatus 100 for generating an image 101 of an observed object. The apparatus 100 is configured to receive first raw data 102 and second raw data 103 and to generate the image 101 using the first raw data 102 and the second raw data 103. The first raw data 102 is generated observing the object using X-ray tomography. The second raw data 103 is generated observing the object using radar tomography.

The first information may be derived from first raw data 102 generated from observing the object using X-ray tomography. The second information may be derived from second raw data 103 generated from observing the object using radar tomography. The X-ray tomography differs from the radar tomography such that the first information can be different from the second information. By this means, each information can be used as a-priori information to generate the image. In other words, the first information can be used in combination with the second raw data and the second information can be used in combination with the first raw data prior or during the process of image generation.

Each of the observation technologies X-ray and radar is based on a tomographic method such that tomographic images of the object can be generated using raw data. The first observation technology may differ from the second observation technology due to different tomographic methods e.g. depending on how the object is observed or imaged.

Image generation may profit from complementary information by means of different observation technologies. As complementary information is used prior or during image generation, improved images can be generated. These improved images may comprise more information or a higher quality than images generated by subsequent fusion of different images corresponding to different imaging modalities. The apparatus 100 may generate images 101 comprising less artefacts, less distortions or may enable to generate images of a consistent quality with less exposure time or dose for observing the object. Reduced exposure times and dose can be advantageous for a better workflow, to reduce costs or resources or to reduce an influence or harm on the object.

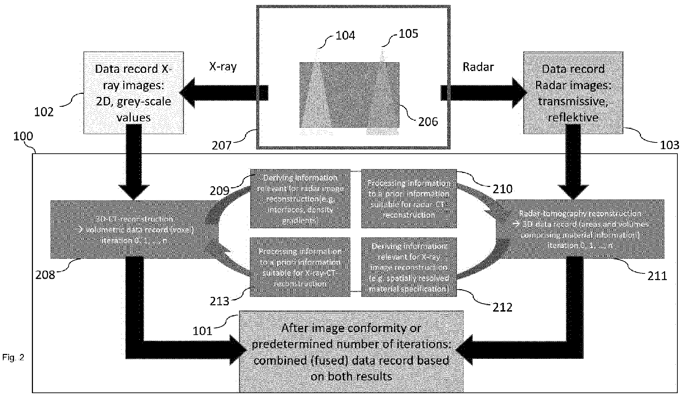

Fig. 2 illustrates a flow chart for generating an image 101 of the object according to a further embodiment. For better understanding, the following description on image generation is based on using raw data generated by X-ray-tomography and radar tomography. Specifications on the observation technologies are only given as examples and are not to be understood in a restricted manner.

According to Fig. 2, an object 206 may be observed by using a first observation technology 104 corresponding to X-ray tomography and by using a second observation technology 105 corresponding to radar tomography. The X-ray tomography 104 uses X-rays to obtain information on the object 206 e.g. regarding a contour, structure or density within the object 206. Observing the object 206 with the first observation technology 104 generates first raw 102 data which can be further used to reconstructtomographic images based on X-ray technology. The radar tomography 105 uses transmissive or reflective radar signals e.g. micro waves to obtain information on the object 206 e.g. regarding a material composition within the object 206. Observing the object 206 with the second observation technology 105 generates second raw data 103 which can be further used to reconstructtomographic images based on radar technology. As illustrated in Fig. 2, X-ray tomography 104 and radar tomography 105 can be implemented in a common setup 207 generating the first and second raw data 102-103. In another example, raw data 102-103 can be generated by separate setups comprising one observation technology, respectively.

The first raw data 102 and second raw data 103 may result from projective measurements of the object 206 using X-ray tomography and transmissive or reflective radar tomography. For example, each observation technology 104-105 may use fan beams radiating a slice of the object 206 from different perspectives. By this means, different projections can be generated. Due to projective data acquisition (summation of image information along line of projection), acquired raw data may further need to be encoded to generate an interpretable image. Raw data can be encoded using a reconstruction algorithm to reconstruct a tomographic image based on data corresponding to the different projections. Raw data may be based on several observed slices of the object such that data reconstruction may reveal several tomographic images or a three-dimensional (3D) reconstruction of the object. In the given example, the first raw data may comprise two-dimensional, grey-scaled X-ray images which can be reconstructed to a 3D image data set. Similarly, second raw data may comprise images generated using transmissive radar signals penetrating the object or using reflective radar signals reflected on the surface of the object. An appropriate 3D radar reconstruction algorithm can be used to generate a interpretable 3D image data set.

As illustrated in Fig. 2, the apparatus 100 receives firstraw data 102 and second raw data 103. The apparatus 100 is further configured to reconstruct a first image 208 using first raw data 102 and a second information 212 derived from a reconstruction using second raw data 103.

Hence, the apparatus 100 can reconstruct the first image 208 based on first raw data 102 and additionally based on the second information 212. The second information 212 is derived from reconstruction using the second raw data 103 generated by observing the object 206by means of radar tomography 105. For example, the second information 212 may comprise a material information on the object 206 e.g. spatially-resolved distribution of permittivity. The second information 212 may comprise information on properties of the object which cannot be derived or not sufficiently derived from X-ray tomography. The second information 212 may comprise data beneficial for X-ray image reconstruction. The second information 212 can be further processed to generate a second a-priori information 213. The second a-priori information 213 can be appropriately used for the reconstruction of the first image 208.

According to another example, the second information 212 can be directly used for reconstructing the first image 208, if appropriate. The first image 208 may have a better quality, e.g. less artefacts than an image reconstructed using first raw data 102 only.

Analogous to the reconstruction of the first image 208, the apparatus 100 is further configured to reconstruct a second image 211 using the second raw data 103 and a first information 209 derived from reconstruction of the first image 208. Hence, the apparatus 100 can reconstruct the second image 211 based on the second raw data 103 and additionally based on the first information 209. The first information 209 is derived from reconstruction using the first raw data 102 generated by observing the object 206 by means of X-ray tomography. For example, the first information 209 may reveal information on interfaces or a density distribution within the object206. The first information 209may comprise information on properties of the object 206 which cannot be derived or not sufficiently derived from radar tomography. The first information 209 may comprise data beneficial for radar image reconstruction. The first information 209 can be further processed to generate a first a-priori information 210. The first a-priori information 210 can be appropriately used for the reconstruction of the second image 211.

According to another example, the first information 209 can be directly used for reconstruct ing the second image 211, if appropriate. The second image 211 may have a better quality, e.g. less artefacts than an image reconstructed using second raw data 103 only.

The first image 208 may comprise a spatial distribution of absorption values and the second image 211 may comprise a spatial distribution of permittivity. Due to the short wavelength of X-rays, the first image 208 may have a higher spatial resolution than the second image 211.

Provision of the first information 109 for reconstruing the second image 211 and provision of the second information 212 for reconstruing the first image 208 may correspond to a continuous, exchanging process. For example, further or more detailed first information 209 can be derived with progress of first image 208 reconstruction. During the reconstruction of the second image 211 further first information 209 can be used for reconstructing the second image 211. By this means and with the progress of the second image 211 reconstruction, further, detailed second information 212 can be derived and in turn provided for reconstructing the first image 208.

Further, the apparatus 100 is configured to generate the image 101 if the first image 208 and the second image 211 fulfill a predetermined criterion. For example, the predetermined criterion is fulfilled if a predetermined progress of image reconstruction or a minimum conformity of the first image 208 and the second image 211 is achieved. The predetermined criterion may correspond to a specification or a limit to be achieved to stop the continuous process to generate the image 101. The predetermined criterion may determine the quality of the image 101 or the period of time used to generate the image 101.

For example, the image 101 is generated by data combination or fusion if reconstruction of the first image 208 and the second image 211 is finished. In the given example, the image 101 may correspond to a 3D image dataset comprising an absorption value and a permittivity for each voxel.

In another example, the image 101 may correspond to the first image 208 reconstructed using the second information 212 or may correspond the second image 211 reconstructed using the first information 209. An image 101 corresponding to the first image 208 may comprise a 3D image dataset with an absorption value for each voxel. An image 101 corresponding to the second image 211 may comprise a 3D image dataset with a permittivity for each voxel.

If appropriate, the image 101 may correspondto a tomographic image referring e.g. to a single slice of the object observed from different perspectives.

By means of using the first raw data 102 and the second raw data 103 for image generation, a better reconstruction of a structure can be achieved on the basis of X-ray data and a distribution of material specifications can be derived on the basis of radar data. Moreover, with greater process of reconstruction, images of higher quality can be generated due to further information derived from complementary raw data.

For example, reconstruction of the radar image 211, can be more performed more accurately. The first information 209, e.g. the structure of the object 206, may be beneficial to eliminate ambiguities in the analysis of secondary reflections or diffraction- or refraction-related distortions. Hence, a mathematical solution set can be reduced and the calculations on the distribution of material specifications can be improved.

For example, the quality of reconstructed X-ray images 208 can be improved as the amount of artefacts in the image can be reduced. Unwanted artifacts may be due to the energy-dependent and material specific absorption coefficients. If a material specification of the object is known, e.g. by using the second information 212, the amount of artefacts in the first image 101 can be reduced.

For example, generation of images 101 of lower quality may be considered to reduce a measurement time, a computation time, an exposure time, radiation time or a dose of the object 206. Generally, the quality of the image 101 may be determined by e.g. acquisition time, used energies for radiation, on the type of object, e.g. sensitivity of material, health condition of a person, on the type of observation technologies generating the raw data, on the type of reconstruction algorithm, or others.

In the embodiment given in Fig. 2, the first image 208 and the second image 211 are reconstructed accordingto an iterative algorithm. Incorporating the first or second information 209, 212 into each reconstruction process can be less complicated if an iterative algorithm is used. Iterative algorithms for reconstruction may be based on additive or multiplicative Algebraic Reconstruction Techniques (ART) or statistical approaches such as Maximum Likelihood-Expectation Maximization (ML-EM).

For example, iterative reconstruction can be based on a statistical process as follows:
Material properties during reconstruction of the second image 211 are adjusted iteratively until a conformity between the first and the second image 208, 211 reaches a maximum. In another example, iterative adjustment is performed until a minimum conformity is achieved or the conformity approaches a threshold.

The determined material properties of the second image 211 can serve as second information 212 to be used for the iterative reconstruction of the first image 208. After first image 208 reconstruction the first information 209 can be derived and further used. The entire process of image reconstruction can be repeated to generate new first and second images 208, 211 based on further first and second information 209, 212. If the generated images remain consistent e.g. without remarkable changes of the images with further reconstruction, the iterative process can be finished.

According to the described iterative reconstruction, the predetermined criterion is fulfilled if e.g. a minimum conformity of the first image 208 and the second image 211 is achieved. According to another example, the predetermined criterion is fulfilled if a predetermined progress of image reconstruction e.g. a predetermined number of iterations is achieved.

In another example and if appropriate, the first and the second image 208, 211 are reconstructed accordingto an analytical reconstruction algorithm e.g. using filtered back projection, Fourier transformation or any arbitrary, appropriate approach of image reconstruction e.g based on machine learning.

Embodiments of the apparatus are not restricted to the given examples.

According to some other examples, the first information 209 is on a density, interface, absorption capacity or atomic number of the observed object and the second information 212 is on a permittivity, refractive index or material specification of the observed object. The first information 209 and the second information 212 may depend on the type of observation technology 104-105. The first information 209 may differ from the second information 212 such that the image reconstruction may profit from information based on complementary observation technologies. The first and second information 209, 212 are not restricted to the given examples. Equally, the first and second information 209, 212 may be on other physical, chemical, optical, material, biological, intracellular, conductive, thermal characteristics or other interactive characteristics of the object.

According to the embodiments, the observation technology 104-105 uses transmissive or reflective radar signals and X-rays. Other implementations not covered by the claims may use infrared light, ultraviolet light, ultrasonic waves or particle radiation e.g. using electrons, positrons, protons, neutrons, alpha particles or other particles appropriate for imaging an object. The first and second observation technologies 104-105 are basedon tomographic methods e.g. such that a reconstruction of the object 206 can be achieved using raw data 102-103 corresponding to different projections of the object 206. The first and the second observation technology 104-105 may enable to observe or identify an internal structure of the object 206 by means of complementary observation technologies each facilitating different advantages e.g. in terms of resolution, specification, impact or harm on the material, time of observation and others.

The second observation technology 105 may differ from the first observation technology 104 or the tomographic method of the second observation technology 105 may differ from the tomographic method of the first observation technology 104. For example, the first and second observation technology 104-105 may use different waves or signals to image the object 206 or the first and second observation technology 104-105 may use the same or a similar wave or signal to image the object 206 with different tomographic methods. Different tomographic methods may use different methods for generating projections of the object 206 such as by using different angles for radiating the object 206 or generally using different approaches for radiating the object 206 for each tomographic method e.g. tomosynthesis or laminography.

In another example, the first and second observation technology 104-105 may use waves, or signals differing in amplitude, polarity, frequency, energy, spectral range, pulse, beam shape, collimation or others. Apart from the given examples, the first and second observation technology 104-105 may use any type of transversal waves, e.g. gamma rays or longitudinal waves, if appropriate. The first and second observation technology 104-105 may use different pharmaceuticals, contrast agents or any other additional means for generating an image of the object 206.

For example, raw data 102-103 may be generated observing the object 206 by means of CT scans or multiple-input-multiple-output (MIMO) radar techniques, just to name a few examples.

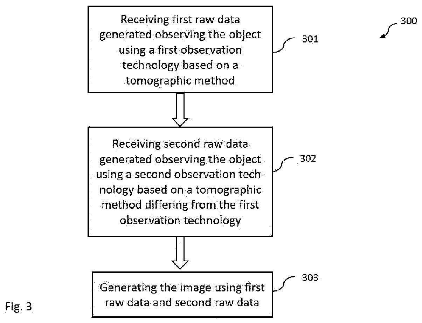

Fig. 3 shows a flow chart of an embodiment of a method 300 for generating an image of an observed object. The method comprises receiving first raw data generated observingthe object using X-ray tomography301. The method 300 further comprises receiving second raw data generated observing the object using radar tomography 302. Further, the method 300 comprises generating the image using first raw data and second raw data 303. The method may generate the image based on any examples previously discussed in terms of the apparatus.

It the following the term wave is used to generally refer to electromagnetic waves, longitudinal waves, signals or beams which are possibly used by an observation technology for imaging an object.

An embodiment of a system for imaging an object comprises a first system configured to observe the object using a first observation technology based on X-ray tomography. The system further comprises a second system configuredto observe the objectaccordingto a second observation technology based on radar tomography. Further, the system is configured to output raw data generated by the first system and raw data generated by the second system. For example, the first and the second system may comprises one or more radiating or transmitting sources, e.g. X-ray tubes, transducers, a transmitter or others to observe the object according to the first or second observation technology, respectively. The first and second system may further comprises one or more detectors to detect a transmissive, reflected or scattered wave in terms of the object or to detect a transmitted wave without having any interaction with the object. The source and detector of the first and second observation technology may differ from each other depending on the wave beingtransmitted and detected. The system may comprise further components such as a collimator, an accelerator, a target, a filter, a power supply unit, a shield, an evaluation unit to generate, output, compute or receive raw data.

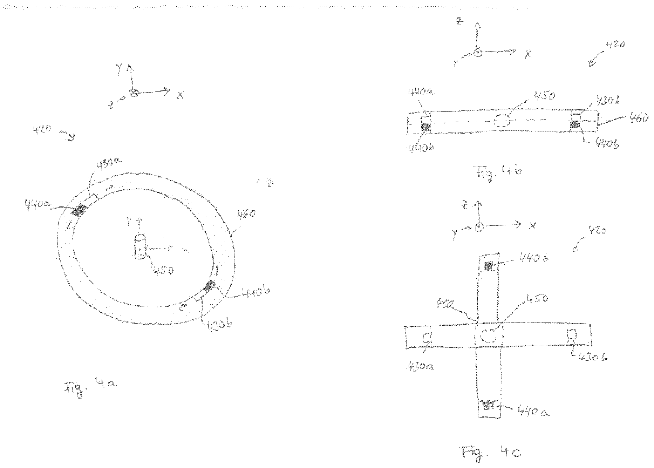

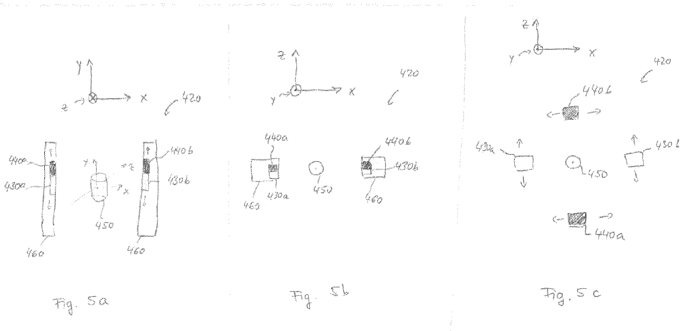

According to some embodiments the first system and the second system use a common coordinate system or each system uses a coordinate system calibrated to the common coordinate system. Fig. 4a-c and Fig. 5a-c show embodiments of the system 420 comprising the first system and the second system in terms of a common coordinate system. In the shown examples, the common coordinate system is a 3D cartesian coordinate system. In other examples, any appropriate coordinate system can be used such as a polar or cylindrical coordinate system.

Fig. 4a-c illustrates systems 420a-c comprising a first system 430a-b with a source 430a and a detector 430b opposite to the source 430a, and a second system 440a-b with a source 440a and a detector 440b opposite to the source 440a. The systems 420a-c may rotate around an object 450 arranged near or at the center of the coordinate system. The system 420 may comprise a moving system 460 configured to rotate the first system 430a-b and the second system 440a-b around the object 450. For example, a gantry system 460 comprising the first and second system 430a-b, 440a,b may facilitate a rotation around the object 450. Rotation may proceed e.g. until observation of the object for a particular angular range or the entire angular range is achieved.

Fig. 4a illustrates a side view of an embodiment of a system 420. The sources 430a, 440a of the first and the second system 430a-b, 440a-b and the detectors 430b, 440b of the first and second system 430a-b, 440a-b may be arranged next to each other in terms of the x-y-plane. The gantry system 460 may facilitate to rotate the first and second systems 430a-b, 440a-b simultaneously e.g. clockwise or counterclockwise in the x-y-plane around the object.

Fig. 4b illustrates a top view of another embodiment of a system 420. The sources 430a, 440a of the first and the second system 43 0a-b, 440a-b and the detectors 430b, 440b of the first and second system 430a-b, 440a-b may be arranged behind each other in terms of the z-axis. For example, the gantry system 460 may facilitate to rotate each system 430a-b, 440a-b in opposite directions such as the first system 430a-b clockwise and the second system 440a-b counterclockwise.

Fig. 4c illustrates a top view of another embodiment of a system 420. The source 430a and the detector 430b of the first system 430a-b may be arranged in a first portion of the gantry system 460 rotating the first system 430a-b in the x-y-plane and the source 440a and the detector 440b of the second system 440a-b may be arranged in a second portion of the gantry system 460 rotating the second system 440a-b in the y-z plane around the object 450.

Fig. 5a-c illustrate systems 420 comprising a first system 430a-b with a source 430a and a detector 430b opposite to the source 430a, and a second system 440a-b with a source 440a and a detector 440b opposite to the source 440a. The object 450 may be arranged near to or at the center of the coordinate system and in between the first and second system 430a-b, 440a-b. The systems 420 may comprise moving systems 460 configured to translate the first system 430a-c and the second system 440a-c relative to the object 450.

Fig. 5a illustrates a side view of an embodiment of a system 420. The sources 430a, 440a of the first and the second system 430a-b, 440a-b and the detectors 430b, 440b of the first and second system 430a-b, 440a-b may be arranged next to each other in terms of the y-axis. In the given example, the first and the second system 430a-b, 440a-b may move simultaneously and linearly in the y-direction.

Fig. 5b illustrates a top view of another embodiment of a system 420. The sources 430a, 440a of the first and the second system 43 0a-b, 440a-b and the detectors 430b, 440b of the first and second system 430a-b, 440a-b may be arranged behind each other in terms of the z-axis. In the given example, the first and the second system 430a-b, 440a-b may move simultaneously and linearly in the y-direction.

Fig. 5c illustrates a top view of another embodiment of a system 420. The source 430a and the detector 430b of the first system 430a-b may be displaced along the x-axis and the source 440a and the detector 440b of the second system 440 may be displaced along the z-axis. A first portion of a moving system may translate the first system 430a-b in z-direction and a second portion of the moving system may translate the second system 440a-b in x-direction.

In another example, the moving system is configured to rotate or translate the object. The object can be rotated or translated additionally to a rotation or translation of the first and second system 430a-b, 440a-b. For example, the object 450 can be scanned according to a Helix-CT configuration with a rotating gantry system 460 and a translating object 450. According to other examples, the moving system may comprise actuators or other components such as C-arms to observe the object sufficiently.

In another example, the position of the first and the second system 430a-b, 440a-b may be fixed and the moving system 460 may be configured to rotate or translate the object 450 only.

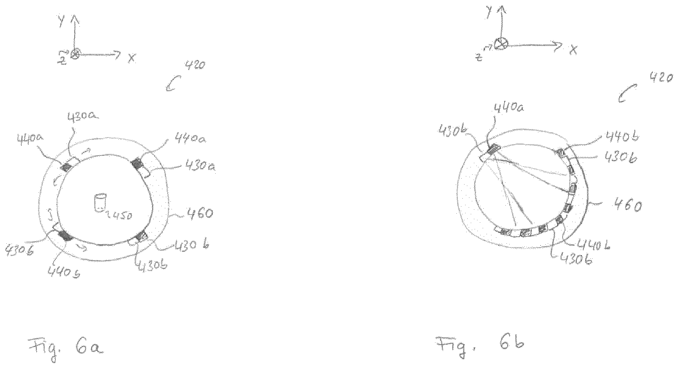

Fig. 6a-b illustrates side views of further embodiments of systems 420 comprising a first and second system 430a-b, 440a-b with more than one source 43 0a, 440a or more than one detector 430b, 440b. In Fig. 6a the first and the second system 430a-b, 440a-b comprise two source-detector pairs arranged in a perpendicular orientation to each other. In Fig. 6b the first and the second system 430a-b, 440a-b comprise one source 430a, 440a respectively and a set of detectors 430b, 440b opposite to the sources 430a, 440a. In the given example, the detectors of the first system 430a-b and the second system 440a-b are arranged alternately.

According to other examples, the sources or detectors of the first and the second system may be arranged above, behind, next, parallel, perpendicular, separate, fixed, moveable or alternately to each other.

According to other embodiments, the system 420 may be a combination of a rotating system e.g. as shown in Fig. 4a-c, Fig. 6a-b and a translating system e.g. as shown in Fig. 5a-c Generally, the first and the second system 430a-b, 440a-b can be arranged arbitrarily e.g. such that the object 450 can be observed in a fast manner, with less or more projections or more or less motion of the object. The first and the second system 430a-b, 440a-b can be arranged appropriately such that a motion of the system 420, the first system or the second system 430a-b, 440a-b can be reduced, a maintenance of the system 420 can be reduced, power can be saved, a variety of projections can be achieved etc.

The system 420 may enable to observe the object 450 simultaneously or separately with respect to two observation technologies. The system 420 may operate in an operation mode using the first system 430a-b and the second system 440a-b alternately. For example, the first system 430a-b may be used to radiate the object 450 and in the meantime the second system 440a-b may be moved to a new position. The first and second system 430a-b, 440a-b may transmit and detect beams alternately according to a predetermined sample rate. In another example, the first and the second system 430a-b, 440a-b may radiate and detect beams simultaneously e.g. if an interaction of beams is not present, not relevant or can be neglected.

Concepts of the apparatus, method or system with respect to the previous description can be based on two, three, four or more observation technologies using tomographic methods.

Concepts of the apparatus 100, method 300 or system 420 may be used for non-destructive-testing (NDT) of e.g. complex dielectric materials to test a material, to determine material specifications or evaluate a manufacturing process e.g. 3D-printing. Further examples of applications can be for material separation for recycling, medical imaging, object identification, baggage scanners at airports or other scanners in public institutions and much more.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

### List of reference signs

- 100: Apparatus
- 101: Image of observed object
- 102: First raw data
- 103: Second raw data
- 104: First observation technology
- 105: Second observation technology
- 206: Object
- 207: Setup comprising the first observation technology and/or the second observation technology
- 208: First image
- 209: First information
- 210: A-priori information based on the first information
- 211: Second image
- 212: Second information
- 213: A-priori information based on the second information
- 300: Method for generating an image of an observed object
- 301: Receiving first raw data generated observing the object using a first observation technology based on a tomographic method
- 302: Receiving second raw data generated observing the object using a second observation technology based on a tomographic method differing from the first observation technology
- 303: Generating the image using first raw data and second raw data
- 420: System for imaging an object
- 430a-b: First system comprising at least one source 430a and at least one detector 430b
- 440a-b: Second system comprising at least one source 440a and at least one detector 440b
- 450: Object
- 460: Moving system

## Claims

1. An apparatus (100) for generating an image (101) of an observed object, wherein the apparatus (100) is configured to
receive first raw data (102) generated observing the object using X-ray tomography (104); receive second raw data (103) generated observing the object using radar tomography (105); reconstruct a first image (208) using first raw data (102) and a second information (212) derived from a reconstruction using second raw data (103); and
generate the image (101) using first raw data (102) and second raw data (103) if the first image (208) and a second image (211) derived using the second raw (103) data fulfill a predetermined criterion, the predetermined criterion being fulfilled if a predetermined progress of image reconstruction or a minimum conformity of the first image (208) and the second image (211) is achieved.

2. The apparatus (100) according to claim 1, further configured to reconstruct the second image (211) using the second raw data (103) and a first information (209) derived from reconstruction of the first image (208).

3. The apparatus (100) according to one of claims 1 to 2, wherein
the first image (208) and the second image (211) are reconstructed according to an iterative algorithm.

4. The apparatus (100) according to one of claims 1 to 3, wherein
the first information (209) is on a density, interface, absorption capacity or atomic number of the observed object; and
the second information (212) is on a permittivity, refractive index or material specification of the observed object.

5. A method (300) for generating an image (101) of an observed object, comprising:
receiving first raw data generated observing the object using X-ray tomography (301);
receiving second raw data generated observing the object using radar tomography (302);
reconstructing a first image using first raw data and a second information derived from a reconstruction using second raw data; and
generating the image using first raw data and second raw data (303) if the first image and a second image derived using the second raw data fulfill a predetermined criterion, the predetermined criterion being fulfilled if a predetermined progress of image reconstruction or a minimum conformity of the first image (208) and the second image (211) is achieved.

6. The method (300) according to claim 5, further comprising:
reconstructing the second image using the second raw data and a first information derived from reconstruction of the first image.

7. The method (300) according to one of claims 5 to 6, wherein
the first image and the second image are reconstructed according to an iterative algorithm.

8. The method (300) according to one of claims 5 to 7, wherein
the first information is on a density, interface, absorption capacity or atomic number of the observed object; and
the second information is on a permittivity, refractive index or material specification of the observed object.

9. The method (300) according to one of claims 5 to 7, wherein
the observation technology uses transmissive or reflective radar signals.

10. A system (420) for imaging an object (450), comprising:
a first system (430a-b) configured to observe the object (450) usingX-ray tomography; and
a second system (440a-b) configured to observe the object (450) according to radar tomography;
wherein the system (420) is configured to
output raw data generated by the first system (430a-b) and raw data generated by the second system (440a-b),
reconstruct a first image using raw data generated by the first system and a second information derived from a reconstruction using raw data generated by the second system, and
generate an image using raw data generated by the first system and raw data generated by the second system if the first image and a second image derived using the raw data generated by the second system fulfill a predetermined criterion, the predetermined criterion being fulfilled if a predetermined progress of image reconstruction or a minimum conformity of the first image (208) and the second image (211) is achieved.

11. The system (420) according to claim 10, wherein
the first system (430a-b) and the second system (440a-b) use a common coordinate system or each system (430a-b, 440a-b) uses a coordinate system calibrated to the common coordinate system.

12. The system (420) according claim 10 or 11, wherein
the observation technology comprises tomography using transmissive or reflective radar signals.

13. The system (420) according to one of claims 11 to 12, further comprising:
a moving system (460) configured to rotate the first system (430a-b) and the second system (440a-b) around the object (450) or to rotate or translate the object (450).

14. A computer program with a program code for performing the method (300) according to one of claims 5 to 9 when the computer program is executed by a processor.

## Patentansprüche

1. Eine Vorrichtung (100) zum Erzeugen eines Bildes (101) eines beobachteten Objekts, wobei die Vorrichtung (100) ausgebildet ist,
erste Rohdaten (102) zu empfangen, die bei Beobachtung des Objekts unter Verwendung von Röntgentomographie (104) erzeugt werden;
zweite Rohdaten (103) zu empfangen, die bei Beobachtung des Objekts unter Verwendung von Radartomographie (105) erzeugt werden;
ein erstes Bild (208) unter Verwendung erster Rohdaten (102) und einer zweiten Information (212), die aus einer Rekonstruktion unter Verwendung zweiter Rohdaten (103) abgeleitet wird, zu rekonstruieren; und
das Bild (101) unter Verwendung erster Rohdaten (102) und zweiter Rohdaten (103) zu erzeugen, wenn das erste Bild (208) und ein zweites Bild (211), das unter Verwendung der zweiten Rohdaten (103) abgeleitet wird, ein vorbestimmtes Kriterium erfüllen, wobei das vorbestimmte Kriterium erfüllt ist, wenn ein vorbestimmter Fortschritt der Bildrekonstruktion oder eine minimale Übereinstimmung des ersten Bildes (208) und des zweiten Bildes (211) erreicht wird.

2. Die Vorrichtung (100) gemäß Anspruch 1, die ferner ausgebildet ist,
das zweite Bild (211) unter Verwendung der zweiten Rohdaten (103) und einer ersten Information (209), die aus der Rekonstruktion des ersten Bildes (208) abgeleitet wird, zu rekonstruieren.

3. Die Vorrichtung (100) gemäß einem der Ansprüche 1 bis 2, wobei
das erste Bild (208) und das zweite Bild (211) gemäß einem iterativen Algorithmus rekonstruiert werden.

4. Die Vorrichtung (100) gemäß einem der Ansprüche 1 bis 3, wobei
die erste Information (209) sich auf eine Dichte, eine Grenzfläche, eine Absorptionskapazität oder eine Ordnungszahl des beobachteten Objekts bezieht; und
die zweite Information (212) sich auf eine Permittivität, einen Brechungsindex oder eine Materialspezifikation des beobachteten Objekts bezieht.

5. Ein Verfahren (300) zum Erzeugen eines Bildes (101) eines beobachteten Objekts, umfassend:
Empfangen erster Rohdaten, die bei Beobachtung des Objekts unter Verwendung von Röntgentomographie (301) erzeugt werden;
Empfangen zweiter Rohdaten, die bei Beobachtung des Objekts unter Verwendung von Röntgentomographie (302) erzeugt werden;
Rekonstruieren eines ersten Bildes unter Verwendung erster Rohdaten und einer zweiten Information, die aus einer Rekonstruktion unter Verwendung zweiter Rohdaten abgeleitet wird; und
Erzeugen des Bildes unter Verwendung erster Rohdaten und zweiter Rohdaten (303), wenn das erste Bild und ein zweites Bild, das unter Verwendung der zweiten Rohdaten abgeleitet wird, ein vorbestimmtes Kriterium erfüllen, wobei das vorbestimmte Kriterium erfüllt ist, wenn ein vorbestimmter Fortschritt der Bildrekonstruktion oder eine minimale Übereinstimmung des ersten Bildes (208) und des zweiten Bildes (211) erreicht wird.

6. Das Verfahren (300) gemäß Anspruch 5, ferner umfassend:
Rekonstruieren des zweiten Bildes unter Verwendung der zweiten Rohdaten und einer ersten Information, die aus der Rekonstruktion des ersten Bildes abgeleitet wird.

7. Das Verfahren (300) gemäß einem der Ansprüche 5 bis 6, wobei das erste Bild und das zweite Bild gemäß einem iterativen Algorithmus rekonstruiert werden.

8. Das Verfahren (300) gemäß einem der Ansprüche 5 bis 7, wobei
die erste Information sich auf eine Dichte, eine Grenzfläche, eine Absorptionskapazität oder eine Ordnungszahl des beobachteten Objekts bezieht; und
die zweite Information sich auf eine Permittivität, einen Brechungsindex oder eine Materialspezifikation des beobachteten Objekts bezieht.

9. Das Verfahren (300) gemäß einem der Ansprüche 5 bis 7, wobei die Beobachtungstechnologie transmissive oder reflektierende Radarsignale verwendet.

10. Eine System (420) zum Abbilden eines Objekts (450), umfassend:
ein erstes System (430a-b), das ausgebildet ist, das Objekt (450) unter Verwendung von Röntgentomografie zu beobachten; und
ein zweites System (440a-b), das ausgebildet ist, das Objekt (450) gemäß Radartomographie zu beobachten;
wobei das System (420) ausgebildet ist,
Rohdaten, die von dem ersten System (430a-b) erzeugt werden, und Rohdaten, die von dem zweiten System (440a-b) erzeugt werden, auszugeben,
ein erstes Bild unter Verwendung von durch das erste System erzeugten Rohdaten und einer zweiten Information, die aus einer Rekonstruktion unter Verwendung von durch das zweite System erzeugten Rohdaten abgeleitet wird, zu rekonstruieren und
ein Bild unter Verwendung von Rohdaten, die von dem ersten System erzeugt werden, und Rohdaten, die von dem zweiten System erzeugt werden, zu erzeugen, wenn das erste Bild und ein zweites Bild, das unter Verwendung der von dem zweiten System erzeugten Rohdaten abgeleitet wird, ein vorbestimmtes Kriterium erfüllen, wobei das vorbestimmte Kriterium erfüllt ist, wenn ein vorbestimmter Fortschritt der Bildrekonstruktion oder eine minimale Übereinstimmung des ersten Bildes (208) und des zweiten Bildes (211) erreicht wird.

11. Das System (420) gemäß Anspruch 10, wobei
das erste System (430a-b) und das zweite System (440a-b) ein gemeinsames Koordinatensystem verwenden oder jedes System (430a-b, 440a-b) ein Koordinatensystem verwendet, das auf das gemeinsame Koordinatensystem kalibriert ist.

12. Das System (420) gemäß Anspruch 10 oder 11, wobei:
die Beobachtungstechnik Tomographie unter Verwendung transmissiver oder reflektierender Radarsignale umfasst.

13. Das Systeme (420) gemäß einem der Ansprüche 11 bis 12, ferner umfassend:
ein Bewegungssystem (460), das ausgebildet ist, das erste System (430a-b) und das zweite System (440a-b) um das Objekt (450) zu rotieren oder das Objekt (450) zu rotieren oder umzusetzen.

14. Ein Computerprogramm mit einem Programmcode zum Durchführen des Verfahrens (300) gemäß einem der Ansprüche 5 bis 9, wenn das Computerprogramm durch einen Prozessor ausgeführt wird.

## Revendications

1. Appareil (100) pour générer une image (101) d'un objet observé, dans lequel l'appareil (100) est configuré pour
recevoir des premières données brutes (102) générées par l'observation de l'objet en utilisant une tomographie à rayons X (104) ;
recevoir des deuxièmes données brutes (103) générées par l'observation de l'objet en utilisant une tomographie radar (105) ;
reconstruire une première image (208) en utilisant des premières données brutes (102) et une deuxième information (212) dérivée d'une reconstruction en utilisant des deuxièmes données brutes (103) ; et
générer l'image (101) en utilisant des premières données brutes (102) et des deuxièmes données brutes (103) si la première image (208) et une deuxième image (211) dérivée en utilisant les deuxièmes données brutes (103) remplissent un critère prédéterminé, le critère prédéterminé étant rempli si un progrès prédéterminé de la reconstruction d'image ou une conformité minimale de la première image (208) et de la deuxième image (211) est atteint.

2. Appareil (100) selon la revendication 1, configuré en outre pour :
reconstruire la deuxième image (211) en utilisant les deuxièmes données brutes (103) et une première information (209) dérivée de la reconstruction de la première image (208).

3. Appareil (100) selon l'une des revendications 1 à 2, dans lequel la première image (208) et la deuxième image (211) sont reconstruites selon un algorithme itératif.

4. Appareil (100) selon l'une des revendications 1 à 3, dans lequel
la première information (209) concerne une densité, une interface, une capacité d'absorption ou un numéro atomique de l'objet observé ; et
la deuxième information (212) concerne une permittivité, un indice de réfraction ou une spécification de matériau de l'objet observé.

5. Procédé (300) pour générer une image (101) d'un objet observé, comprenant le fait de :
recevoir des premières données brutes générées par l'observation de l'objet en utilisant une tomographie à rayons X (301) ;
recevoir des deuxièmes données brutes générées par l'observation de l'objet en utilisant une tomographie radar (302) ;
reconstruire une première image en utilisant des premières données brutes et une deuxième information dérivée d'une reconstruction en utilisant des deuxièmes données brutes ; et
générer l'image en utilisant des premières données brutes et des deuxièmes données brutes (303) si la première image et une deuxième image dérivée en utilisant les deuxièmes données brutes remplissent un critère prédéterminé, le critère prédéterminé étant rempli si un progrès prédéterminé de la reconstruction d'image ou une conformité minimale de la première image (208) et de la deuxième image (211) est atteint.

6. Procédé (300) selon la revendication 5, comprenant en outre le fait de :
reconstruire la deuxième image en utilisant les deuxièmes données brutes et une première information dérivée de la reconstruction de la première image.

7. Procédé (300) selon l'une des revendications 5 à 6, dans lequel la première image et la deuxième image sont reconstruites selon un algorithme itératif.

8. Procédé (300) selon l'une des revendications 5 à 7, dans lequel
la première information concerne une densité, une interface, une capacité d'absorption ou un numéro atomique de l'objet observé ; et
la deuxième information concerne une permittivité, un indice de réfraction ou une spécification de matériau de l'objet observé.

9. Procédé (300) selon l'une des revendications 5 à 7, dans lequel la technologie d'observation utilise des signaux radar transmissifs ou réfléchissants.

10. Système (420) d'imagerie d'un objet (450), comprenant :
un premier système (430a-b) configuré pour observer l'objet (450) en utilisant une tomographie à rayons X ; et
un deuxième système (440a-b) configuré pour observer l'objet (450) selon une tomographie radar ;
dans lequel le système (420) est configuré pour :
sortir des données brutes générées par le premier système (430a-b) et des données brutes générées par le deuxième système (440a-b),
reconstruire une première image en utilisant des données brutes générées par le premier système et une deuxième information dérivée d'une reconstruction en utilisant des données brutes générées par le deuxième système, et
générer une image en utilisant des données brutes générées par le premier système et des données brutes générées par le deuxième système si la première image et une deuxième image dérivée en utilisant les données brutes générées par le deuxième système remplissent un critère prédéterminé, le critère prédéterminé étant rempli si un progrès prédéterminé de la reconstruction d'image ou une conformité minimale de la première image (208) et de la deuxième image (211) est atteint.

11. Système (420) selon la revendication 10, dans lequel
le premier système (430a-b) et le deuxième système (440a-b) utilisent un système de coordonnées commun ou chaque système (430a-b, 440a-b) utilise un système de coordonnées calibré sur le système de coordonnées commun.

12. Système (420) selon l'une des revendications 10 ou 11, dans lequel la technologie d'observation comprend une tomographie utilisant des signaux radar transmissifs ou réfléchissants.

13. Système (420) selon l'une des revendications 11 à 12, comprenant en outre :
un système de déplacement (460) configuré pour faire tourner le premier système (430a-b) et le deuxième système (440a-b) autour de l'objet (450) ou pour faire tourner ou translater l'objet (450).

14. Programme d'ordinateur avec un code de programme configuré pour effectuer le procédé (300) selon l'une des revendications 5 à 9 lorsque le programme d'ordinateur est exécuté par un processeur.
